(19) Europäisches Patentamt
European Patent Office
Office européen des brevets

(11) **EP 4 296 713 A1**

(12) **EUROPEAN PATENT APPLICATION**

(43) Date of publication:
**27.12.2023 Bulletin 2023/52**

(21) Application number: **23176029.9**

(22) Date of filing: **30.05.2023**

(51) International Patent Classification (IPC):
**G01S 7/48** (2006.01)          **G01S 17/42** (2006.01)
**G01S 17/89** (2020.01)         **G01S 17/931** (2020.01)
**G06V 10/764** (2022.01)      **G06V 10/82** (2022.01)
**G06V 20/58** (2022.01)        **G06V 20/64** (2022.01)

(52) Cooperative Patent Classification (CPC):
**G01S 17/931; G01S 7/4802; G01S 17/42;
G01S 17/89; G06V 10/82; G06V 20/58;
G06V 20/64;** G06V 2201/07

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.05.2022  CN 202210600717**

(71) Applicant: **Anhui NIO Autonomous Driving
Technology Co., Ltd.
Hefei, Anhui 230601 (CN)**

(72) Inventors:
• **HE, Xindong
Jiading Shanghai (CN)**
• **REN, Guanghui
Jiading Shanghai (CN)**
• **QIN, Huan
Jiading Shanghai (CN)**
• **PENG, Chao
Jiading Shanghai (CN)**

(74) Representative: **Vossius & Partner
Patentanwälte Rechtsanwälte mbB
Siebertstraße 3
81675 München (DE)**

(54) **TARGET DETECTION METHOD, STORAGE MEDIUM, ELECTRONIC DEVICE, AND VEHICLE**

(57)     The disclosure relates to the field of electric vehicles, and specifically provides a target detection method, a storage medium, an electronic device, and a vehicle, to solve a problem of how to improve a processing speed, generalization, and an anti-interference capability of point cloud data to implement rapid and accurate three-dimensional target detection. For this purpose, the method of the disclosure includes: voxelizing point cloud data to be processed, and obtaining a target detection result by using a target detection network including a sparse 3D convolutional network, a two-dimensional detection network, and a detection head network in sequence. According to the method of the disclosure, point cloud data is voxelized based on voxel positions, thereby reducing dependence of the point cloud data on an absolute distance, and improving anti-interference and generalization of the network. A downsampling structure of the sparse 3D convolutional network is optimized, thereby expanding a detection range in a height direction without an increase in a calculation amount. A first orientation attribute and a second orientation attribute of a yaw angle are introduced, thereby improving a yaw angle generation method, and improving yaw angle detection accuracy.

*FIG. 1*

## Description

**Technical Field**

The disclosure relates to the field of electric vehicles, and specifically provides a target detection method, a storage medium, an electronic device, and a vehicle.

**Background Art**

With the rapid development of computing technologies, sensing technologies, network technologies, and the like, many vehicle enterprises begin to explore a driver assistance function of a vehicle, so that operations of a driver can be reduced, to make a driving process easier and safer, and enable the driver to fully experience convenience brought by scientific and technological progress. In a driver assistance application, a vehicle needs to sense a surrounding environment at any time, to collect data, and detect a static or dynamic object target. Due to physical characteristics of a radar, data such as shape information and distance information of a three-dimensional target can be better captured. Therefore, a radar-based target detection method has attracted more and more attention. In addition, a radar-based target detection technology is also used in applications such as robot autonomous navigation and vehicle autonomous driving.

Point cloud data obtained by using a radar is characterized by a huge data amount, non-uniform spatial distribution, and a large amount of interference information. Therefore, how to improve a processing speed, generalization, and an anti-interference capability of the point cloud data to implement rapid and accurate three-dimensional target detection has become a problem to be urgently solved.

Accordingly, there is a need for a novel solution to solve the above problem in the art.

**Summary**

The disclosure aims to solve or partially solve the above technical problem, that is, how to improve a processing speed, generalization, and an anti-interference capability of point cloud data to implement rapid and accurate three-dimensional target detection.

According to a first aspect, the disclosure provides a target detection method, including:

obtaining point cloud data;

voxelizing the point cloud data to obtain voxelized point cloud data;

obtaining a three-dimensional point cloud feature map by using a three-dimensional feature extraction network based on the voxelized point cloud data;

obtaining a two-dimensional point cloud feature map by using a two-dimensional detection network based on the three-dimensional point cloud feature map; and

obtaining, by using a detection head network based on the two-dimensional point cloud feature map, a target class and a three-dimensional detection box including a yaw angle, where the yaw angle is generated based on a yaw angle value and yaw angle orientation attributes.

In an implementation of the target detection method, the obtaining, by using a detection head network based on the two-dimensional point cloud feature map, a target class and a three-dimensional detection box including a yaw angle includes:

obtaining the target class, the three-dimensional detection box, the yaw angle value, and the yaw angle orientation feature based on the two-dimensional point cloud feature map;

obtaining the yaw angle orientation attributes based on the yaw angle orientation feature, where the yaw angle orientation attributes include a first orientation attribute and a second orientation attribute; and

obtaining the yaw angle based on the yaw angle value, the first orientation attribute, and the second orientation attribute.

In an implementation of the target detection method, the first orientation attribute includes a direction "front" and a direction "rear", and the second orientation attribute includes a direction "left" and a direction "right"; and

the obtaining the yaw angle based on the yaw angle value, the first orientation attribute, and the second orientation attribute includes:

when the yaw angle value falls within a first angle range, obtaining the yaw angle based on the first orientation attribute;

when the yaw angle value falls within a second angle range, obtaining the yaw angle based on the second orientation attribute;

when the yaw angle value falls within a third angle range, obtaining the yaw angle based on the second orientation attribute; or

when the yaw angle value is a first boundary angle or a second boundary angle, using a position corresponding to the yaw angle value as the yaw angle, where

the yaw angle value is a value in a plane rectangular coordinate system (x, y), the yaw angle value in a positive direction of an x-axis is 0, a clockwise rotation direction is negative, a counterclockwise rotation direction is positive, the first angle range is [-45°, 45°], the second angle range is (45°, 90°), the third angle range is (-90°, -45°), the first boundary angle is -90°, and the second boundary angle is 90°.

In an implementation of the target detection method, the voxelizing the point cloud data to obtain voxelized point cloud data includes:

obtaining a coordinate average of each dimension of all point cloud points in each voxel;

subtracting a coordinate of the dimension of a central position of the corresponding voxel from the coordinate average to obtain a voxelized point cloud dimension feature; and

obtaining the difference between the coordinate average of each dimension and the minimum value of a radar detection range corresponding to the dimension, and dividing the difference by a voxel size corresponding to the dimension to obtain a voxelized point cloud coordinate.

In an implementation of the target detection method, the three-dimensional feature extraction network is a sparse 3D convolutional network, where the sparse 3D convolutional network performs downsampling in a height dimension by using a convolutional layer with a convolution kernel size of 3, a stride of 3, and padding of 0.

In an implementation of the target detection method, the method further includes:
analyzing the target detection result based on at least one of a reflectivity, a pulse width, and an echo ID, and filtering out the target detection result that does not meet a preset criterion.

In an implementation of the target detection method, the method further includes:

training, by using a point cloud training set, a target detection network including the three-dimensional feature extraction network, the two-dimensional detection network, and the detection head network; and

obtaining positive samples and negative samples in the point cloud training set through division based on an IOU-based label assignment strategy.

According to a second aspect, the disclosure provides a storage medium configured to store a plurality of program codes, where the program codes are adapted to be loaded and executed by at least one processor to perform the target detection method according to any one of the above solutions.

According to a third aspect, the disclosure provides an electronic device including at least one processor, where the at least one processor executes instructions to implement the target detection method according to any one of the above solutions.

According to a fourth aspect, the disclosure provides a vehicle including the above electronic device.

According to the above technical solutions, in the disclosure, normalization processing is performed on point cloud data in each voxel while voxelization distribution is performed on point cloud data, thereby reducing dependence of the target detection network on an absolute distance, and improving anti-interference and generalization of the network. A downsampling structure of the sparse 3D convolutional network is optimized, thereby expanding a detection range in a height direction without a change in a calculation amount in the network. The yaw angle direction attributes are further divided by using two binary classification networks, thereby improving a yaw angle generation method, and improving yaw angle detection accuracy. In addition, point cloud data based on a coordinate system of a point cloud sensor is transformed into point cloud data based on a coordinate system of an application object, so that the method of the disclosure is applicable to different types of radar sensors, thereby improving practicability of the method of the disclosure, and also expanding a source of data that can be used to train a target detection model of the disclosure. This helps further improve parameters of networks in the model, thereby improving the target detection accuracy.

## Brief Description of the Drawings

Implementations of the disclosure are described below with reference to accompanying drawings, in which:

FIG. 1 is a flowchart of main steps of a target detection method according to an embodiment of the disclosure;

FIG. 2 is a schematic diagram of a structure of a detection head network according to an embodiment of the disclosure; and

FIG. 3 is a schematic diagram of positions of a first orientation attribute and a second orientation attribute according to an embodiment of the disclosure.

## Detailed Description of Embodiments

To make the objectives, technical solutions, and advantages of embodiments of the disclosure clearer, the technical solutions in the embodiments of the disclosure will be clearly and completely described below with reference to the accompanying drawings. Apparently, the described embodiments are some of, rather than all of, the embodiments of the disclosure. Based on the embodiments of the disclosure, all other embodiments obtained by those of ordinary skill in the art without involving any inventive effort shall fall within the scope of protection of the disclosure.

Those skilled in the art should understand that these implementations are only used to explain the technical principles of the disclosure, and are not intended to limit the scope of protection of the disclosure. Those skilled in the art can make adjustments on these implementations as required, to adapt to specific application scenarios.

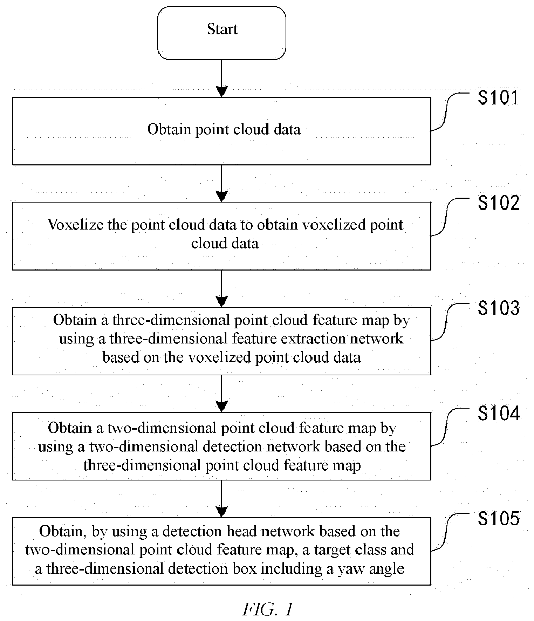

First, referring to FIG. 1, FIG. 1 is a flowchart of main steps of a target detection method according to an embodiment of the disclosure. As shown in FIG. 1, the target detection method of the disclosure includes the following steps:

step S101: obtaining point cloud data;
step S 102: voxelizing the point cloud data to obtain voxelized point cloud data;
step S 103: obtaining a three-dimensional point cloud feature map by using a three-dimensional feature extraction network based on the voxelized point cloud data;
step S 104: obtaining a two-dimensional point cloud feature map by using a two-dimensional detection network based on the three-dimensional point cloud feature map; and
step S 105: obtaining, by using a detection head network based on the two-dimensional point cloud feature map, a target class and a three-dimensional detection box including a yaw angle.

In step S101, preferably, original point cloud data is obtained by using an onboard lidar. In this embodiment of the disclosure, coordinate transformation is first performed on the original point cloud data, to transform the original point cloud data based on a coordinate system of the lidar into the point cloud data that is based on a coordinate system of a vehicle and that is required in step S 102. As an example, when three-dimensional coordinate directions of the coordinate system of the lidar are consistent with those of the coordinate system of the vehicle, coordinate transformation between the two coordinate systems can be completed only through translation. When three-dimensional coordinate directions of the coordinate system of the onboard lidar are inconsistent with those of the coordinate system of the vehicle, coordinate transformation between the two coordinate systems can be completed through rotation and translation.

The method of the disclosure can have wider applicability through coordinate transformation, and the method of the disclosure is applicable to different lidars only by performing corresponding coordinate transformation based on a position relationship between the onboard lidar and the vehicle.

After coordinate transformation of the point cloud data is completed, the point cloud data may be enhanced according to an actual condition, to further enhance point cloud features and improve a target detection effect. A point cloud data enhancement method includes at least one of translation, yaw angle rotation, and scaling.

In step S 102, voxelization of the point cloud data aims to transform sparse three-dimensional point clouds into dense three-dimensional voxel features to reduce a calculation amount of data processing.

First, three-dimensional rectangular coordinate systems of the point cloud data and voxel space are separately established. In this embodiment of the disclosure, the coordinate system of the vehicle is used for both the three-dimensional rectangular coordinate systems of the point cloud data and the voxel space. In the coordinate system of the vehicle, a vehicle head direction is set to a positive direction of an x-axis, a left side of a vehicle head is set to a positive direction of a y-axis, an upper side of the vehicle is set to a positive direction of a z-axis, that is, the x-axis and the y-axis are two coordinate axes perpendicular to each other in a horizontal plane, and the z-axis is a coordinate axis perpendicular to the horizontal plane in a height direction.

Each point cloud point in the point cloud data is assigned to a corresponding voxel based on three-dimensional coordinates and voxel positions of point cloud points. In this case, a number of point cloud points in each voxel is not fixed, and may be one or more or may be zero.

Because later data processing is performed by taking a voxel as a unit, preliminary feature extraction needs to be performed on the point cloud points in voxels to obtain voxelized and regular point cloud data. In a specific implementation, normalization processing is performed on all point cloud points in each voxel based on a spatial position of each voxel, specifically including obtaining voxelized point cloud dimension features and voxelized point cloud coordinates.

A method for obtaining the voxelized point cloud dimension features includes: obtaining an average of each dimension of all the point cloud points in the voxel; and subtracting a value of the dimension of a central position of the corresponding voxel from the average of each dimension to obtain a voxelized point cloud dimension feature. A method for obtaining the voxelized point cloud dimension features is as follows:

$$X_f = \left(\frac{1}{n}\sum_{1}^{n} x_i\right) - X_{voxel\_center}$$

$$Y_f = \left(\frac{1}{n}\sum_{1}^{n} y_i\right) - Y_{voxel\_center}$$

$$Z_f = \left(\frac{1}{n}\sum_{1}^{n} z_i\right) - Z_{voxel\_center}$$

$X_f$, $Y_f$, and $Z_f$ are voxelized point cloud dimension features of an $f^{th}$ voxel in an x direction, a y direction, and a z direction, respectively; $x_i$, $y_i$, and $z_i$ are coordinates of an $i^{th}$ point cloud point in the $f^{th}$ voxel in the x direction, the y direction, and the z direction, respectively; $X_{voxel\_center}$, $Y_{voxel\_center}$, and $Z_{voxel\_center}$ are coordinates of a central position of the $f^{th}$ voxel in the x direction, the y direction, and the z direction, respectively, and $\left(\frac{1}{n}\sum_{1}^{n} x_i\right)$, $\left(\frac{1}{n}\sum_{1}^{n} y_i\right)$, and $\left(\frac{1}{n}\sum_{1}^{n} z_i\right)$ are averages of the $i^{th}$ point cloud point in the $f^{th}$ voxel in the x direction, the y direction, and the z direction, respectively; and n is a number of point cloud points in the $f^{th}$ voxel, and is at least 1.

A method for obtaining the voxelized point cloud coordinates includes: obtaining an average of each dimension of all the point cloud points in the voxel; and obtaining the difference between the average of each dimension and the minimum value of a lidar detection range corresponding to the dimension, and dividing the difference by a voxel size corresponding to the dimension to obtain a normalized voxelized point cloud coordinate. A method for obtaining the voxelized point cloud coordinates is as follows:

$$X_{coordinate\_f} = \frac{\left(\left(\frac{1}{n}\Sigma_1^n x_i\right) - Range\_min_x\right)}{voxel_{size_x}}$$

$$Y_{coordinate\_f} = \frac{\left(\left(\frac{1}{n}\Sigma_1^n y_i\right) - Range\_min_y\right)}{voxel_{size_y}}$$

$$Z_{coordinate\_f} = \frac{\left(\left(\frac{1}{n}\Sigma_1^n z_i\right) - Range\_min_z\right)}{voxel_{size_z}}$$

$X_{coordinate\_f}$, $Y_{coordinate\_f}$, and $Z_{coordinate\_f}$ are voxelized point cloud coordinates of the f$^{th}$ voxel in the x direction, the y direction, and the z direction, respectively; $\left(\frac{1}{n}\sum_{1}^{n}x_i\right)$, $\left(\frac{1}{n}\sum_{1}^{n}y_i\right)$, and $\left(\frac{1}{n}\sum_{1}^{n}z_i\right)$ are averages of the i$^{th}$ point cloud point in the f$^{th}$ voxel in the x direction, the y direction, and the z direction, respectively; n is a number of point cloud points in the f$^{th}$ voxel, and is at least 1; $Range\_min_x$, $Range\_min_y$, and $Range\_min_z$ are minimum values of lidar detection ranges in the x direction, the y direction, and the z direction, respectively; and $voxel_{size_x}$, $voxel_{size_y}$ and $voxel_{size_z}$ are voxel sizes of the voxel in the x direction, the y direction, and the z direction, respectively.

The detection ranges in the x direction, the y direction, and the z direction depend on performance of the lidar. As an example, if a detection range of the lidar in the x direction is 0 meter to 300 meters, $Range\_min_x$=0.

It should be noted that for a voxel having zero point cloud points, calculation of voxelized point cloud dimension features and voxelized point cloud coordinates is not required, and the voxel does not need to be input to a sparse 3D convolutional network.

The voxel size is usually set according to an actual condition. A larger voxel size indicates a smaller data calculation amount and more lost features of the voxelized point cloud data. A smaller voxel size indicates a larger data calculation amount and more retained features of the voxelized point cloud data. Preferably, in this embodiment of the disclosure, the voxel sizes are as follows:

$$voxel_{size_x} = 0.12m, \ voxel_{size_y} = 0.12m, \text{ and } voxel_{size_z} = 0.1481m.$$

It should be noted that during voxelization of point cloud dimension features, the average of each dimension is calculated to normalize features of all the point cloud points in the voxel, and the central position of the voxel is subtracted from the average to obtain a distance relative to a center of each voxel, so that a distance relative to a center of the vehicle (also equivalent to the onboard lidar) is removed. This has advantages of reducing dependence of a neural network for processing the voxelized point cloud data on an absolute distance, improving anti-interference of the neural network for point cloud distribution of the lidar, and also improving generalization of the neural network.

For other feature data such as the yaw angle, a reflectivity, and a pulse width in the point cloud data, averages of other feature data of all the point cloud points in each voxel are calculated to obtain other voxelized feature data. The other voxelized feature data is also used as input data of the sparse 3D convolutional network in step S103.

In step S103, feature extraction is performed on the voxelized point cloud data by using the sparse 3D convolutional network, to obtain the three-dimensional point cloud feature map. In this embodiment of the disclosure, network parameters for performing downsampling on spatial features are optimized, and downsampling is performed on the z-axis (in the height direction) by using a convolutional layer with a convolution kernel size of 3, a stride of 3, and padding of 0. The network parameters are optimized, so that a detection range in the height direction can be increased without a change in a calculation amount in the network.

To add more receptive fields and combine point cloud features of more levels, in step S104, the three-dimensional point cloud feature map is input to the two-dimensional detection network to extract two-dimensional point cloud features. In this embodiment of the disclosure, the three-dimensional point cloud feature map is first compressed in the height direction, and then feature extraction is performed on a compressed three-dimensional point cloud feature map by using a VGG-like network, to obtain the two-dimensional point cloud feature map.

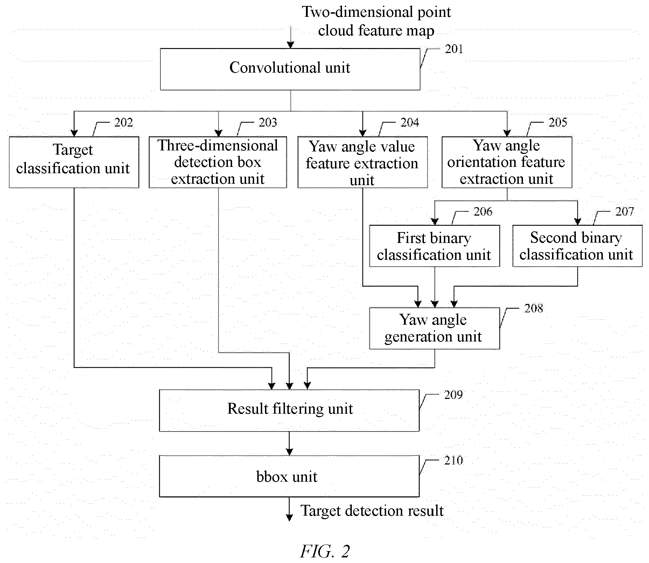

In step S105, the two-dimensional point cloud feature map is input to the detection head network to perform target classification and positioning. A structure of the detection head network is shown in FIG. 2. The detection head network includes a convolutional unit 201, a target classification unit 202, a three-dimensional detection box extraction unit 203, a yaw angle value feature extraction unit 204, a yaw angle orientation feature extraction unit 205, a first binary classification unit 206, a second binary classification unit 207, a yaw angle generation unit 208, a result filtering unit 209, and a bbox unit 210.

The two-dimensional point cloud feature map obtained in step S 104 is input to the convolutional unit 201 to further perform feature extraction on the two-dimensional point cloud feature map to obtain an enhanced two-dimensional point cloud feature map. The enhanced two-dimensional point cloud feature map is separately input to the target classification unit 202, the three-dimensional detection box extraction unit 203, the yaw angle value feature extraction unit 204, and the yaw angle orientation feature extraction unit 205.

Output of the target classification unit 202 is the target class.

Output of the three-dimensional detection box extraction unit 203 is the three-dimensional detection box. The three-dimensional detection box includes spatial positions x, y, and z, values 1, w, and h of a length, a width, and a height of the three-dimensional detection box, and other point cloud attribute features, such as a proportion feat1 of a high-reflectivity point cloud point in the three-dimensional detection box.

Output of the yaw angle value feature extraction unit 204 is a yaw angle value.

Output of the yaw angle orientation feature extraction unit 205 is a yaw angle orientation feature.

The yaw angle orientation feature is separately input to the first binary classification unit 206 and the second binary classification unit 207. Output of the first binary classification unit 206 is a first orientation attribute. Output of the second binary classification unit 207 is a second orientation attribute.

The yaw angle value, the first orientation attribute, and the second orientation attribute are input to the yaw angle generation unit 208 to obtain the yaw angle.

A target classification result, three-dimensional detection box parameters, and the yaw angle are input to the result filtering unit 209 to filter out a redundant three-dimensional detection box through non-maximum suppression.

A filtered three-dimensional detection box, the target type, and the yaw angle are input to the bbox unit to obtain a target detection result. Therefore, a target detection result expressed in a bbox form is obtained. As an example, the target detection result may be expressed as bbox=(C, x, y, z, l, w, h, yaw, feat1), where C is the target class, such as a small motor vehicle, a large motor vehicle, or a pedestrian; x, y, and z are spatial positions of the three-dimensional detection box; 1, w, and h are a length, a width, and a height of the three-dimensional detection box; and yaw is the yaw angle, and feat1 is a proportion of a high-reflectivity point cloud point in the three-dimensional detection box.

In practical applications, because there are usually interference signals in radar data, there may be some false signals in the target detection result. To further improve accuracy of the target detection result, other attributes such as a reflectivity, a pulse width, and an echo ID of point cloud data in the three-dimensional detection box may be analyzed to filter out a false target that does not meet a preset criterion. As an example, when a traffic marking object to which a reflective material is attached exists on a road, reflection intensity of the traffic marking object to the radar signal is relatively large, and a point cloud contour formed by the traffic marking object spreads to the surroundings, to form a point cloud shape larger than the real object. The traffic marking object is likely to be mistakenly recognized as a vehicle in the target detection result, affecting driver assistance control of the vehicle. In this case, with reference to the proportion of the high-reflectivity point cloud point in the target detection result, when a value of the proportion is greater than a preset high-reflectivity threshold, for example, 60%, it is determined that the target is not a vehicle.

As an example, in this embodiment of the disclosure, a two-layer convolutional network is selected as the convolutional unit 201, a single-layer convolutional network is selected as the target classification unit 202, the three-dimensional detection box extraction unit 203, the yaw angle value feature extraction unit 204, and the yaw angle orientation feature extraction unit 205, and a binary classification network is selected as the first binary classification unit 206 and the second binary classification unit 207.

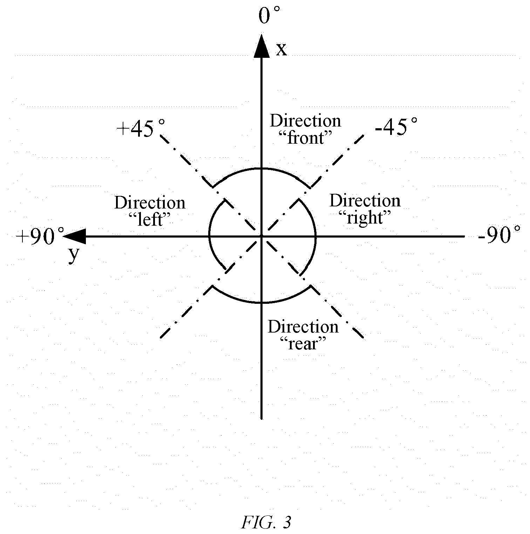

Next, a method for generating the yaw angle based on the yaw angle value, the first orientation attribute, and the second orientation attribute in the yaw angle generation unit 208 is further described with reference to FIG. 3.

In the above vehicle coordinate system, the x-axis and the y-axis are two coordinate axes perpendicular to each other in a vehicle horizontal plane, and it is agreed that the vehicle head direction is the positive direction of the x-axis, the left side of the vehicle head is the positive direction of the y-axis, the positive direction of the x-axis is 0°, a counterclockwise rotation direction is positive, and a clockwise rotation direction is negative, that is, an included angle between the positive direction of the x-axis and the positive direction of the y-axis is +90°, and an included angle between the positive direction of the x-axis and a negative direction of the y-axis is - 90°. A value range of the yaw angle value is [-90°, +90°].

It should be noted that in this embodiment of the disclosure, the value range of the angle value is expressed in the following method: When the value range of the angle value is expressed as [A, B], it indicates that the value range of the angle value is between A and B and includes A and B. When the value range of the angle value is expressed as (A, B), it indicates that the value range of the angle value is between A and B and includes neither A nor B. When the value range of the angle value is expressed as (A, B], it indicates that the value range of the angle value is between A and B and includes B but does not include A.

The first orientation attribute includes a direction "front" and a direction "rear". The direction "front" corresponds to [-45°, 45°] of the vehicle horizontal plane rectangular coordinate system, and the direction "rear" corresponds to [135°, 180°] and (-180°, -135°] of the vehicle horizontal plane rectangular coordinate system.

The second orientation attribute includes a direction "left" and a direction "right". The direction "left" corresponds to (+45°, +135°) of the vehicle horizontal plane rectangular coordinate system, and the direction "right" corresponds to (-135°, -45°) of the vehicle horizontal plane rectangular coordinate system.

With reference to the angle ranges of the yaw angle orientation attributes, yaw angle values of a same yaw angle determining method may be divided into different angle ranges, to determine the yaw angle.

When the yaw angle value falls within a first angle range [-45°, 45°], only the first orientation attribute is valid, and the yaw angle is determined based on the first orientation attribute. When the first orientation attribute is the direction "front", the yaw angle is a position corresponding to the yaw angle value. When the first orientation attribute is the direction "rear", the yaw angle is a position obtained by rotating the yaw angle value counterclockwise by 180°. As an example, the yaw angle value is 30°. If the first orientation attribute is the direction "front", the yaw angle is +30°. If the first orientation attribute is the direction "rear", through counterclockwise rotation by 180°, that is, 180° is added to 30°, the yaw angle value is 210° and the corresponding yaw angle is -150°.

When the yaw angle value falls within a second angle range (45°, 90°), only the second orientation attribute is valid, and the yaw angle is determined based on the second orientation attribute. When the second orientation attribute is the direction "left", the yaw angle is a position corresponding to the yaw angle value. When the second orientation attribute is the direction "right", the yaw angle is a position obtained by rotating the yaw angle value counterclockwise by 180°. As an example, the yaw angle value is 60°. If the second orientation attribute is the direction "left", the yaw angle is +60°. If the second orientation attribute is the direction "right", through counterclockwise rotation by 180°, that is, 180° is added to 60°, the yaw angle value is 240° and the corresponding yaw angle is -120°.

When the yaw angle value falls within a third angle range (-90°, -45°), only the second orientation attribute is valid, and the yaw angle is determined based on the second orientation attribute. When the second orientation attribute is the direction "left", the yaw angle is a position obtained by rotating the yaw angle value counterclockwise by 180°. When the second orientation attribute is the direction "right", the yaw angle is a position corresponding to the yaw angle value. As an example, the yaw angle value is -60°. If the second orientation attribute is the direction "left", through counterclockwise rotation by 180°, that is, 180° is added to -60°, the yaw angle value is 120° and the corresponding yaw angle is +120°. If the second orientation attribute is the direction "right", the yaw angle is -60°.

When the yaw angle value is a first boundary angle -90 or a second boundary angle 90°, the yaw angle is a position corresponding to the yaw angle value, that is, the yaw angle is -90° or +90°, respectively.

It should be noted that in this embodiment of the disclosure, a yaw angle range is (-180°, +180°].

In this embodiment of the disclosure, in a point cloud data processing process, the yaw angle direction attributes are further divided into the direction "front", the direction "rear", the direction "left", and the direction "right", and boundary lines for dividing the yaw angle direction attributes are angle bisector positions of the x-axis direction and the y direction. Directions of the yaw angle are divided into eight intervals in a horizontal plane by using the boundary lines for dividing the yaw angle direction attributes in combination with the x-axis direction and the y direction, so that detection of the yaw angle is more accurate.

Before a target detection network mainly including the sparse 3D convolutional network, the two-dimensional detection network, and the detection head network is used, overall training needs to be performed on the target detection network by using a point cloud training set.

Similarly, point cloud data in the point cloud training set is also point cloud data obtained after coordinate transformation and that is relative to the vehicle. Through coordinate transformation, data of different lidars can be used, thereby expanding a source of a point cloud training data set.

During generation of point cloud labels, positive samples and negative samples in the point cloud training set are obtained through division based on an IOU-based label assignment strategy, and forward or backpropagation training is performed on the target detection network by using a TensorFlow deep learning framework.

It should be noted that the sparse 3D convolutional network, the VGG-like network, the non-maximum suppression, the TensorFlow deep learning framework, and the like are feature extraction and data screening methods commonly used by those skilled in the art. Details are not described herein.

Further, the disclosure further provides a storage medium. The storage medium may be configured to store a program for performing the target detection method in the above method embodiment, and the program may be loaded and executed by at least one processor to implement the above target detection method. For ease of description, only parts related to the embodiments of the disclosure are shown. For specific technical details that are not disclosed, reference may be made to the method part of the embodiments of the disclosure. The storage medium may be a storage device formed by various electronic devices. Optionally, the storage medium in the embodiments of the disclosure is a non-transitory readable-writable storage medium.

Further, the disclosure further provides an electronic device including at least one processor, where the at least one processor may be configured to execute instructions to implement the target detection method in the above method embodiment. For ease of description, only parts related to the embodiments of the disclosure are shown. For specific technical details that are not disclosed, reference may be made to the method part of the embodiments of the disclosure. The target detection device may be a control device formed by various electronic devices.

Further, the disclosure further provides a vehicle. The vehicle includes the above electronic device including at least one processor, where the at least one processor may be configured to execute instructions to implement the target detection method in the above method embodiment. Optionally, the vehicle is a new energy vehicle that has a driver assistance function and in which an onboard lidar is installed.

Those skilled in the art should be able to realize that the method steps of the various examples described in conjunction with the embodiments disclosed herein can be implemented in electronic hardware, computer software or a combination of both. To clearly illustrate the interchangeability of electronic hardware and software, the compositions

**EP 4 296 713 A1**

and steps of the various examples have been generally described in terms of functionality in the above description. Whether these functions are performed in electronic hardware or software depends on the specific application and design constraints of the technical solutions. Those skilled in the art can implement the described functions by using different methods for each particular application, but such implementation should not be considered as going beyond the scope of the disclosure.

It should be noted that the terms "first", "second", and other ordinal numbers in the description, claims, and drawings of the disclosure are only intended to distinguish between similar objects, not to describe or indicate a particular order or sequence. It should be understood that the data termed in such a way is interchangeable in proper circumstances so that the embodiments of the disclosure described herein can be implemented in other orders than the order illustrated or described herein.

Heretofore, the technical solutions of the disclosure have been described with reference to the preferred implementations shown in the accompanying drawings. However, those skilled in the art can readily understand that the scope of protection of the disclosure is apparently not limited to these specific implementations. Those skilled in the art may make equivalent changes or substitutions to the related technical features without departing from the principle of the disclosure, and all the technical solutions with such changes or substitutions shall fall within the scope of protection of the disclosure.

**Claims**

1. A target detection method, comprising:
   obtaining point cloud data;

   voxelizing the point cloud data to obtain voxelized point cloud data;
   obtaining a three-dimensional point cloud feature map by using a three-dimensional feature extraction network based on the voxelized point cloud data;
   obtaining a two-dimensional point cloud feature map by using a two-dimensional detection network based on the three-dimensional point cloud feature map; and
   obtaining, by using a detection head network based on the two-dimensional point cloud feature map, a target class and a three-dimensional detection box comprising a yaw angle, wherein the yaw angle is generated based on a yaw angle value and yaw angle orientation attributes.

2. The target detection method according to claim 1, wherein the obtaining, by using a detection head network based on the two-dimensional point cloud feature map, a target class and a three-dimensional detection box comprising a yaw angle comprises:

   obtaining the target class, the three-dimensional detection box, the yaw angle value, and the yaw angle orientation feature based on the two-dimensional point cloud feature map;
   obtaining the yaw angle orientation attributes based on the yaw angle orientation feature, wherein the yaw angle orientation attributes comprise a first orientation attribute and a second orientation attribute; and
   obtaining the yaw angle based on the yaw angle value, the first orientation attribute, and the second orientation attribute.

3. The target detection method according to claim 2, wherein

   the first orientation attribute comprises a direction "front" and a direction "rear", and the second orientation attribute comprises a direction "left" and a direction "right"; and
   the obtaining the yaw angle based on the yaw angle value, the first orientation attribute, and the second orientation attribute comprises:

   when the yaw angle value falls within a first angle range, obtaining the yaw angle based on the first orientation attribute;
   when the yaw angle value falls within a second angle range, obtaining the yaw angle based on the second orientation attribute;
   when the yaw angle value falls within a third angle range, obtaining the yaw angle based on the second orientation attribute; or
   when the yaw angle value is a first boundary angle or a second boundary angle, using a position corresponding to the yaw angle value as the yaw angle, wherein

9

the yaw angle value is a value in a plane rectangular coordinate system (x, y), the yaw angle value in a positive direction of an x-axis is 0, a clockwise rotation direction is negative, a counterclockwise rotation direction is positive, the first angle range is [-45°, 45°], the second angle range is (45°, 90°), the third angle range is (-90°, -45°), the first boundary angle is -90°, and the second boundary angle is 90°.

4. The target detection method according to any of claims 1 to 3, wherein the voxelizing the point cloud data to obtain voxelized point cloud data comprises:

obtaining a coordinate average of each dimension of all point cloud points in each voxel;
subtracting a coordinate of the dimension of a central position of the corresponding voxel from the coordinate average to obtain a voxelized point cloud dimension feature; and
obtaining the difference between the coordinate average of each dimension and the minimum value of a radar detection range corresponding to the dimension, and dividing the difference by a voxel size corresponding to the dimension to obtain a voxelized point cloud coordinate.

5. The target detection method according to any of claims 1 to 4, wherein the three-dimensional feature extraction network is a sparse 3D convolutional network, wherein the sparse 3D convolutional network performs downsampling in a height dimension by using a convolutional layer with a convolution kernel size of 3, a stride of 3, and padding of 0.

6. The target detection method according to any of claims 1 to 5, further comprising:
analyzing the target detection result based on at least one of a reflectivity, a pulse width, and an echo ID, and filtering out the target detection result that does not meet a preset criterion.

7. The target detection method according to any one of claims 1 to 6, further comprising:

training, by using a point cloud training set, a target detection network comprising the three-dimensional feature extraction network, the two-dimensional detection network, and the detection head network; and
obtaining positive samples and negative samples in the point cloud training set through division based on an IOU-based label assignment strategy.

8. A non-transitory readable-writable storage medium, adapted to store a plurality of program codes, wherein the program codes are adapted to be loaded and executed by at least one processor to perform a target detection method according to any one of claims 1 to 7.

9. An electronic device, comprising at least one processor, wherein the at least one processor executes instructions to implement a target detection method according to any one of claims 1 to 7.

10. A vehicle, comprising the electronic device according to claim 9.

```
                        ┌─────────────┐
                        │    Start    │
                        └─────────────┘
                               │
                               ▼
   ┌────────────────────────────────────────────────────┐   ╭── S101
   │              Obtain point cloud data               │   │
   └────────────────────────────────────────────────────┘   ╯
                               │
                               ▼
   ┌────────────────────────────────────────────────────┐   ╭── S102
   │    Voxelize the point cloud data to obtain         │   │
   │            voxelized point cloud data              │   ╯
   └────────────────────────────────────────────────────┘
                               │
                               ▼
   ┌────────────────────────────────────────────────────┐   ╭── S103
   │   Obtain a three-dimensional point cloud feature   │   │
   │   map by using a three-dimensional feature         │   │
   │   extraction network based on the voxelized        │   ╯
   │             point cloud data                       │
   └────────────────────────────────────────────────────┘
                               │
                               ▼
   ┌────────────────────────────────────────────────────┐   ╭── S104
   │   Obtain a two-dimensional point cloud feature     │   │
   │   map by using a two-dimensional detection         │   │
   │   network based on the three-dimensional point     │   ╯
   │               cloud feature map                    │
   └────────────────────────────────────────────────────┘
                               │
                               ▼
   ┌────────────────────────────────────────────────────┐   ╭── S105
   │   Obtain, by using a detection head network        │   │
   │   based on the two-dimensional point cloud         │   │
   │   feature map, a target class and a                │   ╯
   │   three-dimensional detection box including a      │
   │               yaw angle                            │
   └────────────────────────────────────────────────────┘
```

*FIG. 1*

Two-dimensional point
cloud feature map

```
                              ┌──────────────────────────────┐ ┌── 201
                              │     Convolutional unit        │
                              └──────────────────────────────┘
```

| Target classification unit | Three-dimensional detection box extraction unit | Yaw angle value feature extraction unit | Yaw angle orientation feature extraction unit |
|---|---|---|---|
| — 202 | — 203 | — 204 | — 205 |

| First binary classification unit | Second binary classification unit |
|---|---|
| — 206 | — 207 |

Yaw angle generation unit — 208

Result filtering unit — 209

bbox unit — 210

Target detection result

*FIG. 2*

FIG. 3

Europäisches
Patentamt

European
Patent Office

Office européen
des brevets

**EUROPEAN SEARCH REPORT**

Application Number

EP 23 17 6029

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2021/165413 A1 (GUO ZHENYU [CA] ET AL) 3 June 2021 (2021-06-03) * paragraph [0051] * * figures 1-13 * | 1-10 | INV. G01S7/48 G01S17/42 G01S17/89 G01S17/931 G06V10/764 G06V10/82 G06V20/58 G06V20/64 |
| A | US 2021/148709 A1 (KUMAR ARUN CS [US] ET AL) 20 May 2021 (2021-05-20) * paragraph [0111] – paragraph [0123] * * figures 1-10 * | 1-10 | |

TECHNICAL FIELDS
SEARCHED      (IPC)

G01S
G06V

The present search report has been drawn up for all claims

| Place of search | Date of completion of the search | Examiner |
|---|---|---|
| Munich | 10 November 2023 | Köppe, Maro |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

................................................................

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 23 17 6029

This annex lists the patent family members relating to the patent documents cited in the above-mentioned European search report.
The members are as contained in the European Patent Office EDP file on
The European Patent Office is in no way liable for these particulars which are merely given for the purpose of information.

10-11-2023

| Patent document cited in search report | | Publication date | Patent family member(s) | | Publication date |
|---|---|---|---|---|---|
| US 2021165413 | A1 | 03-06-2021 | US 2021165413 | A1 | 03-06-2021 |
| | | | WO 2020023731 | A1 | 30-01-2020 |
| US 2021148709 | A1 | 20-05-2021 | US 2021148709 | A1 | 20-05-2021 |
| | | | US 2021150720 | A1 | 20-05-2021 |

EPO FORM P0459

For more details about this annex : see Official Journal of the European Patent Office, No. 12/82